(19) **Europäisches Patentamt**
**European Patent Office**
**Office européen des brevets**

(11) **EP 4 043 769 B1**

(12) **EUROPÄISCHE PATENTSCHRIFT**

(45) Veröffentlichungstag und Bekanntmachung des Hinweises auf die Patenterteilung:
**25.12.2024   Patentblatt 2024/52**

(21) Anmeldenummer: **22152352.5**

(22) Anmeldetag: **20.01.2022**

(51) Internationale Patentklassifikation (IPC):
**F16K 37/00** *(2006.01)*

(52) Gemeinsame Patentklassifikation (CPC):
**F16K 37/0041**

(54) **VERFAHREN ZUR MESSUNG DER BESCHLEUNIGUNG IN EINEM PROZESSVENTIL UND PROZESSVENTIL**

METHOD FOR MEASURING ACCELERATION IN A PROCESS VALVE, AND PROCESS VALVE

PROCEDE DE MESURE D'ACCELERATION DANS UNE VANNE DE PROCESSUS, ET VANNE DE PROCESSUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2021   DE 102021102738**

(43) Veröffentlichungstag der Anmeldung:
**17.08.2022   Patentblatt 2022/33**

(73) Patentinhaber: **GEMÜ Gebr. Müller Apparatebau GmbH & Co. Kommanditgesellschaft 74653 Ingelfingen (DE)**

(72) Erfinder: **Höfs, Daniel**
**74653 Künzelsau (DE)**

(74) Vertreter: **DREISS Patentanwälte PartG mbB**
**Friedrichstraße 6**
**70174 Stuttgart (DE)**

(56) Entgegenhaltungen:
| | |
|---|---|
| EP-A1- 0 637 713 | EP-A2- 0 410 317 |
| DE-A1- 19 947 129 | US-A1- 2002 062 682 |
| US-A1- 2005 126 639 | US-A1- 2006 254 357 |

**Beschreibung**

Die nachfolgende Beschreibung betrifft Fortschritte im Bereich der Prozessventile.

Aus dem Stand der Technik sind Positionsgeber bekannt, die mit einem federnd gelagerten Fuß die bewegbare Antriebsstange des Prozessventils kontaktieren. So kann eine Position der Antriebsstange ermittelt und eine Stellung des Ventils ausgegeben werden.

Die Probleme des Standes der Technik werden durch ein Verfahren gemäß dem Anspruch 1 und durch ein Prozessventil gemäß einem nebengeordneten Anspruch gelöst. Vorteilhafte Weiterbildungen finden sich in den Unteransprüchen, der Beschreibung und in der Zeichnung.

US 2005/126639 A1 offenbart ein Diagnosesystem für ein Ventil mit einem körperschallerfassenden Sensor und mit einer Einrichtung zur Auswertung eines Meßsignals des Körperschalls.

US 2006/254357 A1 offenbart Ein Diagnosesystem für ein Rückschlagventil einer Verdrängerpumpe unter Verwendung eines Körperschallsensors. Dabei werden Werte im geschlossenen Zustand und im offenen Zustand des Rückschlagventils aufgezeichnet.

EP 0 637 713 A1 offenbart ein Diagnose-System für Regel- und Absperrventile. Dabei werden durch einen Beschleunigungsaufnehmer Schwingungen des jeweiligen Ventils ermittelt.

DE 199 47 129 A1 betrifft ein Diagnosesystem für ein von einem Stellungsregler über einen Antrieb betätigbares Ventil mit einem Aufnehmer für Körperschall und mit einer Einrichtung zur Auswertung eines aufgenommenen Meßsignals.

Gemäß US 2002/062682 A1 wird ein Körperschallspektrum, das bei leicht geöffnetem, intaktem Ventil aufgenommen wird, in einer Vorrichtung zur Aufnahme, Speicherung und Auswertung gespeichert. Dann wird das Ventil zu Diagnosezwecken geschlossen und es wird ein Körperschallspektrum aufgenommen. Anschließend wird die Ähnlichkeit zwischen dem aufgezeichneten Körperschallspektrum und dem gespeicherten Körperschallspektrum als Kriterium für die Bewertung der Ventilleckage herangezogen.

Gemäß EP 0 410 317 A2 werden akustische und magnetische Techniken gekoppelt, um mit einem nicht-invasiven Inspektionssystem Verschlechterungen eines Ventils zu erfassen. Dabei ist ein Doppelsensor vorgesehen, der aus Beschleunigungsmesser und einem Hall-Effekt-Sensor besteht.

Ein erster Aspekt der Beschreibung betrifft ein Verfahren, das im Anspruch 1 definiert ist.

Die Anforderungen bzgl. Rechenleistung und Speicher sind gering genug, dass dieses Verfahren im Feld auf günstiger Hardware lauffähig ist.

Die Aggregation des Beschleunigungssignals zu dem Diagnoseergebnis verbessert die Fehlerdiagnose und die Überwachung des Prozessventils. Durch die Berücksichtigung der relativen Beschleunigung kann der Betriebswert unabhängig von der Einbaulage des Prozessventils ermittelt werden. Damit bleiben Freiheitsgrade bei der Anordnung der Einzelkomponenten und der Anordnung des Prozessventils innerhalb der Anlage erhalten.

Vorteilhaft wird die Alterung des Ventils 'ignoriert', da aktuelle Beschleunigungsdaten verwendet werden. Folglich findet eine Bewertung des aktuellen Zustandes des Prozessventils statt und kein Vergleich mit einem fabrikneuen Prozessventil. Insbesondere, da nicht alle Verschleißmechanismen in Ihrer Wirkung bekannt sind, verhindert das Verfahren vorteilhaft, dass eine übliche Alterung als Anomalie erkannt wird.

Vorteilhaft können Positionsgeber in Ihrer Funktion ergänzt oder gar ersetzt werden, wenn das Diagnoseergebnis den aktuellen Betriebszustand des Ventils indiziert. Darüber hinaus lässt sich die vorgeschlagene Lösung kostengünstig umsetzen.

Erfindungsgemäß umfasst die Ermittlung des Diagnoseergebnisses eine Ermittlung einer Ventilstellung in Abhängigkeit von dem Beschleunigungssignal und in Abhängigkeit von einem mit einem Ventilantrieb assoziierten Ansteuersignal.

Vorteilhaft wird ein Ansteuersignal detektiert und mit dem Beschleunigungssignal zur Ermittlung der Ventilstellung genutzt. Mechanische Elemente zur Ermittlung der Ventilstellung können somit entfallen.

Ein vorteilhaftes Beispiel zeichnet sich dadurch aus, dass das Verfahren umfasst: Ermitteln eines ersten Zeitpunktes, welcher einen Beginn einer von dem Ventilantrieb ausgehenden Bewegung eines Absperrkörpers des Prozessventils repräsentiert, in Abhängigkeit von dem mit dem Ventilantrieb assoziierten Ansteuersignal; wobei das wenigstens eine Beschleunigungssignal eine Mehrzahl von Beschleunigungswerten, welche jeweils eine parallel zur Stellachse orientierte relative Beschleunigung wenigstens eines Teils des Prozessventils repräsentieren, umfasst; wobei das Verfahren umfasst: Ermitteln eines auf den ersten Zeitpunkt folgenden zweiten Zeitpunktes, welcher ein Erreichen wenigstens einer Endposition des bewegbaren Absperrkörpers des Prozessventils charakterisiert, in Abhängigkeit von der Mehrzahl von Beschleunigungswerten, welche jeweils die parallel zur Stellachse orientierte Beschleunigung des Prozessventils repräsentieren.

Vorteilhaft kann damit auf die jeweiligen Zeitpunkte, zu denen die Öffnung oder Schließung des Prozessventils beginnt bzw. endet, geschlossen werden.

Ein vorteilhaftes Beispiel zeichnet sich dadurch aus, dass die Ventilstellung als das Diagnoseergebnis ermittelt wird, wenn der zweite Zeitpunkt sich innerhalb wenigstens eines Zeitfensters, dessen zeitliche Position abhängig von dem ersten Zeitpunkt ist, befindet.

Vorteilhaft kann so die Funktion eines mechanischen Stellungsgebers ersetzt oder ergänzt werden.

Ein vorteilhaftes Beispiel zeichnet sich dadurch aus, dass eine mit einem Öffnungsvorgang oder Schließvorgang des Prozessventils assoziierte Anomalie als Diagnoseergebnis ermittelt wird, wenn der zweite Zeitpunkt sich außerhalb des bzw. eines Zeitfensters, dessen zeitliche Position abhängig von dem ersten Zeitpunkt ist, befindet.

Vorteilhaft können Anomalien, die den Öffnungs- oder Schließvorgang betreffen, auf einfache Art und Weise ermittelt werden.

Ein vorteilhaftes Beispiel zeichnet sich dadurch aus, dass das Verfahren umfasst: Ermitteln einer Mehrzahl von Paaren von Öffnungs- und Schließzeitdauern des Prozessventils, insbesondere in Abhängigkeit von dem Ansteuersignal und in Abhängigkeit von dem Beschleunigungssignal; und Ermitteln einer Anomalie in Abhängigkeit von der Mehrzahl von Paaren von Öffnungs- und Schließzeitdauern.

Die Analyse der Schaltzeiten, also der Öffnungs- und/oder Schließzeitdauern, kann Änderungen an der Betriebsspannung und mit dem Prozessmedium assoziierte Änderungen erkennen. Vorteilhaft bilden sich kurz- und mittelfristige zeitliche Veränderungen im Öffnungs- und Schließverhalten des Prozessventils ab. Die Ursachen hierfür sind vielfältig und können eine Änderung von Prozessparametern, Betriebsparametern, o.ä. umfassen. Dabei muss die Anomalie nicht zwangsläufig einen Fehler indizieren.

Vorteilhaft wird die Anomalie dann erkannt, wenn sich Prozess- oder Betriebsparameter des Prozessventils ändern. Ausgehend von und damit relativ zu dem Betriebs- und Prozesszustand wird die Anomalie ermittelt. Ob tatsächlich ein Fehlerfall vorliegt, wenn die Anomalie erkannt wird, kann anschließend entweder durch das Betriebspersonal oder eine nachrangige Ermittlungsfunktion ermittelt werden.

Werden beispielsweise absichtlich Prozessparameter verändert, kann die Anomalie lediglich diesen Veränderungszustand anzeigen. Bleiben Prozessparameter hingegen gleich, so kann die erkannte Anomalie auf einen Fehlerfall hinweisen.

Ein vorteilhaftes Beispiel zeichnet sich dadurch aus, dass die Ermittlung des wenigstens einen Diagnoseergebnisses eine Ermittlung einer mit dem Prozessmedium assoziierten Druckänderung in Abhängigkeit von dem wenigstens einen Beschleunigungssignal umfasst, wobei das wenigstens eine Beschleunigungssignal eine Mehrzahl von Beschleunigungswerten, welche jeweils eine lotrecht zur Stellachse orientierte Beschleunigung des Prozessventils repräsentieren, umfasst.

Die Analyse der Beschleunigungen lotrecht zur Antriebsachse bzw. Stellachse, insbesondere die Analyse des Betrags der Beschleunigungen in der zur Antriebsache orthogonalen Ebene, ermöglicht diese Auswertung. Vorteilhaft lässt sich also das wenigstens eine Beschleunigungssignal nutzen, um vom Prozessmedium verursachte Druckschläge zu detektieren. Vorteilhaft wird durch die lotrechte Orientierung in Bezug zu den Beschleunigungswerten erreicht, dass eine Montage des Antriebs, dem der wenigstens eine Beschleunigungssensor zugeordnet ist, drehwinkelunabhängig erfolgen kann.

Ein vorteilhaftes Beispiel zeichnet sich dadurch aus, dass die mit dem Prozessmedium assoziierte Druckänderung dann ermittelt wird, wenn ein Druckänderungs-Schwellwert von wenigstens einem der Mehrzahl von Beschleunigungswerten, welche jeweils die lotrecht zur Stellachse orientierte Beschleunigung des Prozessventils repräsentieren, überschritten wird.

Durch die Bereitstellung der Information, dass eine Druckänderung stattgefunden hat, lässt auf den Betriebszustand des vorliegenden Ventils oder eines anderen, im gemeinsamen Fluidpfad befindlichen Ventils schließen.

Ein vorteilhaftes Beispiel zeichnet sich dadurch aus, dass die Ermittlung des wenigstens einen Diagnoseergebnisses eine Ermittlung einer Druckänderungs-Anomalie, insbesondere eines kritischen Druckschlags, umfasst, sobald wenigstens einer der Mehrzahl von Beschleunigungswerten, welche jeweils die lotrecht zur Stellachse orientierte Beschleunigung des Prozessventils repräsentieren, einen von einer Mehrzahl von Druckänderungen abhängigen oder einen vorab festgelegten Druckänderungs-Schwellwert überschreitet.

Vorteilhaft können somit kritische Druckschläge, die vom Normalbetrieb, der durch die Mehrzahl von bisher aufgenommenen Druckänderungen repräsentiert wird, abweichen, sicher erkannt werden. Vorteilhaft wird die Druckänderungs-Anomalie dynamisch von den vorliegenden Druckänderungs-Schwellwerten, die für die jeweilige Anwendung typisch sind, ermittelt. Damit wird nur dann die Druckänderungs-Anomalie erkannt, wenn von den betriebstypischen Druckschlägen abgewichen wird.

Ein zweiter Aspekt der Beschreibung betrifft ein Prozessventil, das in Anspruch 9 definiert ist.

Ein vorteilhaftes Beispiel zeichnet sich dadurch aus, dass der wenigstens eine Beschleunigungssensor mit dem Ventilantrieb feststehend verbunden ist.

Es muss insbesondere bei der Anordnung eines Antriebskörpers des Ventilantriebs nicht auf die exakte Drehposition des Antriebskörpers geachtet werden, da vorliegend die relativen Beschleunigungen, insbesondere lotrecht zur Stellachse des Prozessventils, gemessen werden. Vorteilhaft kann der Antriebskörper gegenüber einem Ventilkörper verdreht werden. Die Montage und Wartung sind somit von dem Verfahren zur Ermittlung des Diagnoseergebnisses entkoppelt.

Ein vorteilhaftes Beispiel zeichnet sich dadurch aus, dass der Beschleunigungssensor auf einer Leiterplatte angeordnet ist, die fest mit dem Ventilantrieb verbunden ist.

Ein vorteilhaftes Beispiel zeichnet sich dadurch aus, dass die Schnittstelle eine Datenschnittstelle und/oder eine Benutzerschnittstelle umfasst.

In der Zeichnung zeigen:

Figuren 1, 3, 4, 7, 9 und 10     jeweils ein schematisches Blockdiagramm;

Figur 2     ein schematisch dargestelltes Prozessventil;

Figuren 5 und 6     jeweils ein Beschleunigungs-Zeit-Diagramm; und

Figur 8     paarweise assoziierte Öffnungs- und Schließdauern.

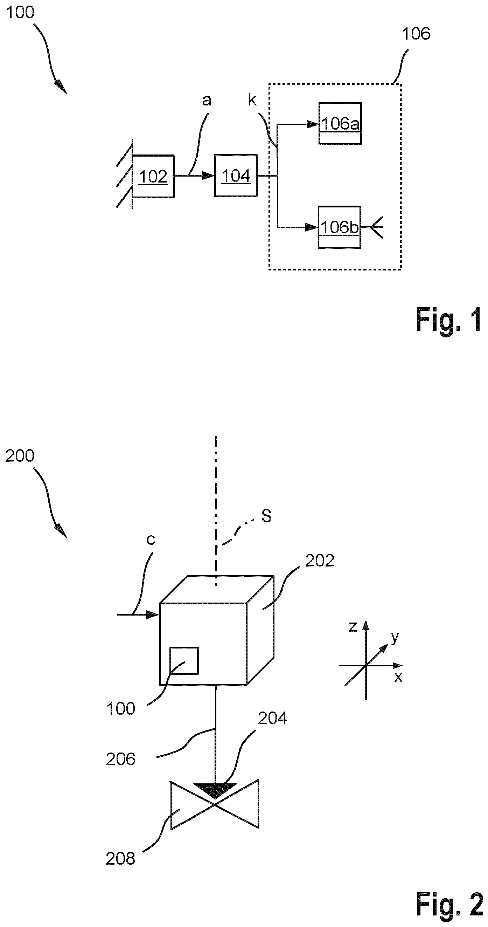

Figur 1 zeigt in schematischer Form ein Blockdiagramm einer Vorrichtung 100 eines beispielsweise normal-geöffneten oder normal-geschlossenen Prozessventils. Ein zu einer Stellachse des Prozessventils 200 feststehend angeordneten Beschleunigungssensor 102 ist dazu eingerichtet, wenigstens ein eine relative Beschleunigung wenigstens eines Teils des Prozessventils 200 repräsentierendes Beschleunigungssignal a zu ermitteln. Das Beschleunigungssignal umfasst bzw. repräsentiert eine Mehrzahl von relativen Beschleunigungen bzw. Beschleunigungswerten über der Zeit. Eine Auswerteeinheit 104 ist dazu eingerichtet, wenigstens ein Diagnoseergebnis k des Prozessventils 200 in Abhängigkeit von dem wenigstens einen Beschleunigungssignal a zu ermitteln. Eine Schnittstelle 106 ist dazu eingerichtet, das wenigstens eine Diagnoseergebnis k einer Prozessleitebene oder einem Wartungspersonal bereitzustellen.

Eine Benutzerschnittstelle 106a umfasst beispielsweise ein an dem Prozessventil angeordnetes optisches Leuchtmittel wie bspw. eine LED, um dem Wartungspersonal das Diagnoseergebnis wie beispielsweise auftretende Anomalien anzuzeigen.

Eine Datenschnittstelle 106b umfasst beispielsweise eine Funkschnittstelle, die das ermittelte Diagnoseergebnis k drahtlos an weitere Einheiten, insbesondere einen Access-Point übermittelt. Damit können die ermittelten Diagnoseergebnisse entweder einer Prozessleitebene oder einer Cloud-Einheit zur Verfügung gestellt werden.

Das Diagnoseergebnis k ist nur beispielhaft. Nachfolgend werden eine Reihe von Diagnoseergebnissen und Ermittlungsverfahren erläutert.

Figur 2 zeigt ein weiteres schematisches Blockdiagramm des Prozessventils 200, welches die Vorrichtung 100 aus der Figur 1 umfasst. Entlang der Stellachse S bewegt ein Ventilantrieb 202 über eine Antriebsstange 206 einen Absperrkörper 204 auf einen Ventilsitz eines Ventilkörpers 208 zu oder von diesem weg. Entsprechend schließt sich das Prozessventil 200 oder es öffnet sich. Der Ventilantrieb 202 wird über ein Ansteuersignal c betrieben und bewegt die Antriebsstange 206 entsprechend dem Ansteuersignal c.

Der Beschleunigungssensor 102 ist auf einer Leiterplatte angeordnet, die fest mit dem Ventilantrieb 202 verbunden ist. Die Ermittlungseinheit 104 und die Schnittstelle 106 sind beispielsweise mit dem Beschleunigungssensor 102 auf der gemeinsamen Leiterplatte angeordnet. Die Vorrichtung 100 ist beispielsweise Teil des Ventilantriebs 202 und in dessen Gehäuse untergebracht.

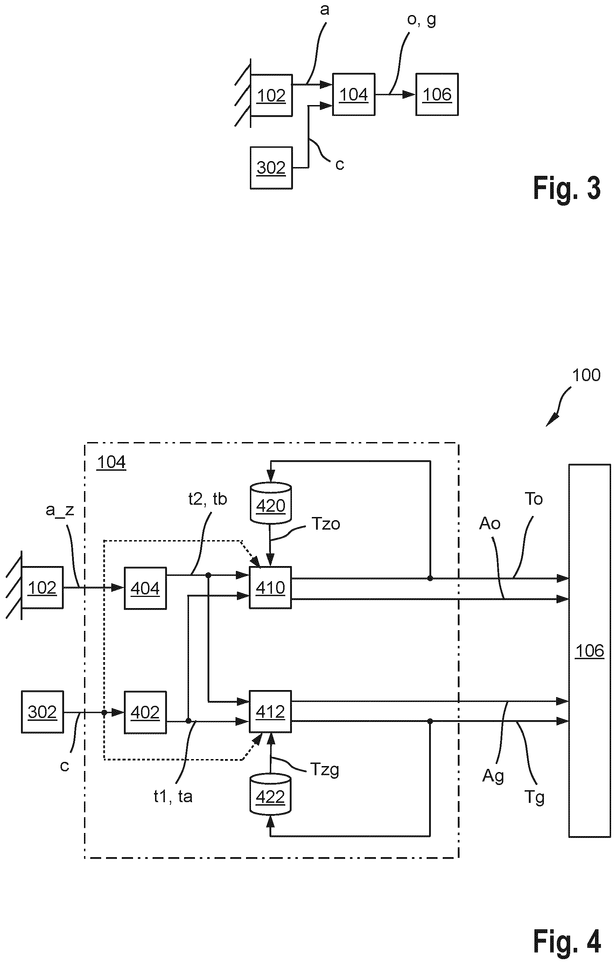

Figur 3 zeigt ein schematisches Blockdiagramm der Vorrichtung 100. Die Ermittlung des Diagnoseergebnisses umfasst eine Ermittlung einer Ventilstellung o, g in Abhängigkeit von dem Beschleunigungssignal a und in Abhängigkeit von dem mit einem Ventilantrieb 202 assoziierten Ansteuersignal c.

Eine Ermittlungseinheit 302 ist dazu eingerichtet, das Ansteuersignal c für den Ventilantrieb oder ein damit assoziiertes Signal insbesondere für die Ermittlung der Ventilstellung bereitzustellen. Als Ventilantrieb kommen beispielsweise Luftdruckantriebe, Magnetantriebe, elektromotorische Antriebe in Betracht. Je nach Antriebstyp ist die Ermittlungseinheit 302 dazu ausgebildet, den Startzeitpunkt eines Öffnungs- oder Schließzyklus im Sinne einer Ansteuerung des Prozessventils zu ermitteln. Im Falle einer elektrischen Spannung kann der Spannungs- und/oder Stromverlauf einer das Ansteuerungssignal c führenden elektrischen Leitung beobachtet werden.

Figur 4 zeigt ein weiteres schematisches Blockdiagramm. Eine Ermittlungseinheit 402 ist dazu eingerichtet, einen ersten Zeitpunkt t1, ta, welcher einen Beginn einer von dem Ventilantrieb 202 ausgehenden Bewegung eines Absperrkörpers 204 des Prozessventils 200 aus Figur 2 repräsentiert, in Abhängigkeit von dem mit dem Ventilantrieb assoziierten Ansteuersignal c zu ermitteln. Hierbei umfasst das wenigstens eine Beschleunigungssignal a aus den Figuren 1 und 3 eine Mehrzahl von Beschleunigungswerten a_z, welche jeweils eine parallel zur Stellachse orientierte relative Beschleunigung wenigstens eines Teils des Prozessventils repräsentieren.

Eine Ermittlungseinheit 404 ist dazu eingerichtet, einen auf den ersten Zeitpunkt t1, ta folgenden zweiten Zeitpunkt t2, tb, welcher ein Erreichen wenigstens einer Endposition des bewegbaren Absperrkörpers 204 des Prozessventils 200 aus Figur 2 charakterisiert, in Abhängigkeit von der Mehrzahl von auf den ersten Zeitpunkt t1, ta folgenden Beschleunigungswerten a_z zu ermitteln.

Mittels der Ermittlungseinheit 104 wird beispielsweise die Ventilstellung o, g gemäß Figur 3 als Diagnoseergebnis ermittelt, wenn der zweite Zeitpunkt t2, tb sich innerhalb wenigstens eines Zeitfensters Tzo, Tzg, dessen zeitliche Position abhängig von dem ersten Zeitpunkt t1, ta ist, befindet.

Eine mit einem Öffnungsvorgang oder Schließvorgang des Prozessventils 200 assoziierte Anomalie Ao, Ag wird, mittels einer jeweiligen Ermittlungseinheit 410, 412, als Diagnoseergebnis ermittelt, wenn der zweite Zeitpunkt t2, tb sich außerhalb des Zeitfensters Tzo, Tzg, dessen zeitliche Position abhängig von dem ersten Zeitpunkt t1, ta ist, befindet.

Die Ermittlungseinheit 410, 412 ermittelt in Abhängigkeit von den zugeführten ersten und zweiten Zeitpunkten t1 und t2 und in Abhängigkeit von dem Zeitfenster Tzo, Tzg eine mit dem Öffnungsvorgang des Prozessventils assoziierten Öffnungszeitdauer To bzw. eine mit dem Schließvorgang des Prozessventils assoziierten Schließzeitdauer Tg. Insbesondere bei erwarteten zeitlichen Unterschieden zwischen den Zeitfenstern Tzo und Tzg können diese zur Unterscheidung eines Schließ- und Öffnungsvorgangs verwendet werden.

Alternativ oder zusätzlich dient der Einheit 410, 412 zur Unterscheidung zwischen dem Öffnungs- und Schließvorgang das Ansteuersignal c, insbesondere dessen Verlauf bei einem Beginn des Öffnens bzw. Schließens.

Das Zeitfenster Tzo, Tzg und dessen Abstand zu dem jeweiligen ersten Zeitpunkt t1, ta werden beispielsweise von einer Anzahl von in der Vergangenheit liegenden Öffnungszeitdauern To bzw. Schließzeitdauern Tg und deren zugehörigen ersten Zeitpunkten t1, ta ermittelt. Das Zeitfenster Tzo, Tzg kann beispielsweise durch einen Mittelwert und eine Varianz einer Mehrzahl von in der Vergangenheit liegenden Öffnungszeitdauern To bzw. Schließzeitdauern Tg und ggf. einen zusätzlichen Summanden oder Skalierungswert charakterisiert werden. Liegt die zweite Zeitdauer t2, tb außerhalb des Zeitfensters Tzo, Tzg, dann wird die Anomalie Ao, Ag ermittelt.

Die Ermittlung der Öffnungszeitdauer To als Diagnoseergebnis wird in Abhängigkeit von dem ersten und dem zweiten Zeitpunkt t1, t2 durchgeführt, wenn das Ansteuersignal c ein Öffnen des Prozessventils indiziert und/oder wenn die ermittelte Zeitdauer zwischen dem ersten und dem zweiten Zeitpunkt t1, t2 innerhalb der erwarteten Öffnungs-Zeitdauer Tzo liegt.

Die Öffnungszeitdauer To entspricht einem Durchlaufen des mit dem Ventilsitz zusammenwirkenden beweglichen Absperrmittels von einer Schließposition in eine voll geöffnete Position, bei der die Ventilstange beispielsweise auf einen Endanschlag trifft.

Die Ermittlung der Schließzeitdauer Tg als Diagnoseergebnis wird in Abhängigkeit von dem ersten und dem zweiten Zeitpunkt ta, tb durchgeführt, wenn das Ansteuersignal c ein Schließen des Prozessventils indiziert und/oder wenn die Zeitdauer zwischen dem ersten und dem zweiten Zeitpunkt ta, tb innerhalb des erwarteten Schließ-Zeitfensters Tzg liegt.

Die Schließzeitdauer Ts entspricht einem Durchlaufen des mit dem Ventilsitz zusammenwirkenden beweglichen Absperrmittels von einer voll geöffneten Position in eine geschlossene Position, in der das Absperrmittel auf den Ventilsitz trifft.

Die aktuell gültigen Zeitfenster Tzo, Tzg sind in einer Speichereinheit 420, 422 abgespeichert. Das Zeitfenster Tzo, Tzg und dessen Abstand zu dem jeweiligen ersten Zeitpunkt t1, ta werden beispielsweise in nicht gezeigter Form als vorab ermittelter Werte abgespeichert.

Wird eine insbesondere nicht Anomalie-behaftete Öffnungszeitdauer To bzw. Schließzeitdauer Tg ermittelt, dann steht mit der Bereitstellung der Öffnungszeitdauer To bzw. Schließzeitdauer Tg wenigstens implizit auch die Ventilstellung fest und kann ebenfalls bereitgestellt werden.

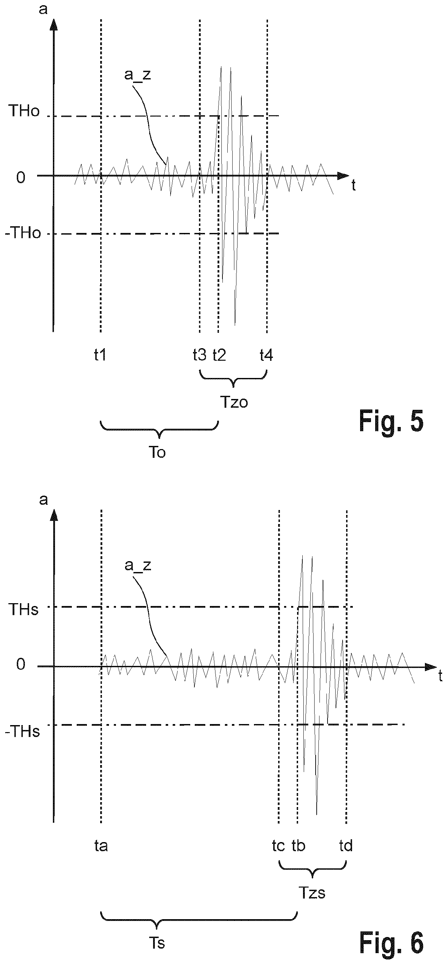

Figur 5 zeigt beispielhaft den zeitlichen Verlauf der Beschleunigungswerte a_z des Beschleunigungssignals a während des Öffnungsvorgangs. Der zweite Zeitpunkt t2 wird ermittelt, wenn einer der Mehrzahl von Beschleunigungswerten a_z innerhalb eines zeitlich nach dem ersten Zeitpunkt t1 liegenden Zeitfensters Tzo ein vorab festgelegter oder von während des Betriebs bestimmten Parametern abhängiger Schwellwert THo, -THo überschritten wird. Wird der voran genannte Schwellwert THo, -THo hingegen vor oder nach dem Zeitfenster Tzo registriert, so wird ein Fehler ausgegeben. In anderen Worten: Der Schließ- bzw. Öffnungsvorgang des Ventils wird an der Überschreitung des jeweiligen Schwellwert erkannt.

Der Beginn der Bewegung aus der geschlossenen Position heraus gemäß dem ersten Zeitpunkt t1 lässt sich auch durch die Beobachtung des Ansteuersignals c ermitteln. Der zweite Zeitpunkt t2, zu dem die geöffnete Position erreicht wird, wird dann ermittelt, wenn die Beschleunigungswerte a_z, die zeitlich nach dem ersten Zeitpunkt t1 liegen, durch das Erreichen der Endposition einen der Schwellwerte THo, -THo überschreiten. Liegt der zweite Zeitpunkt t2 in einem durch die Zeitpunkte t3 und t4 definierten Zeitfenster Tzo, so wird der Ventilzustand als geöffnet erkannt. Liegt der zweite Zeitpunkt t2 hingegen in nicht dargestellter Form außerhalb des Zeitfensters Tzo, wird als Diagnoseergebnis ein Fehler oder wenigstens eine Anomalie ausgegeben. Die Position des Zeitfensters ist von dem ersten Zeitpunkt t1 abhängig und beispielsweise durch einen fest vorgegebenen Abstand der Zeitpunkte t1 und t3 vorgegeben.

Die Zeitpunkte t2 bzw. tb in Figur 6 werden beispielsweise wie folgt ermittelt: Der Zeitpunkt t2 bzw. tb wird innerhalb eines aufgenommenen Beschleunigungssignals dort ermittelt, wo der Betrag der Beschleunigung im Umfeld des erkannten Ereignisses maximal ist.

Figur 6 zeigt beispielhaft den zeitlichen Verlauf der Beschleunigungswerte a_z während des Schließvorgangs. Im Vergleich zu dem vorangehend erläuterten Öffnungsvorgang dauert der hier gezeigte Schließvorgang länger. Selbstverständlich kann dies auf umgekehrt sein.

Der erste Zeitpunkt ta stellt den Beginn des Schließvorgangs dar. Wird zu dem zweiten Zeitpunkt tb einer der Schwellwerte THs, - THs überschritten, so kann die Schließzeitdauer Ts ermittelt werden. Vorliegend liegt der zweite Zeitpunkt tb innerhalb des erwarteten Zeitfensters Tzs.

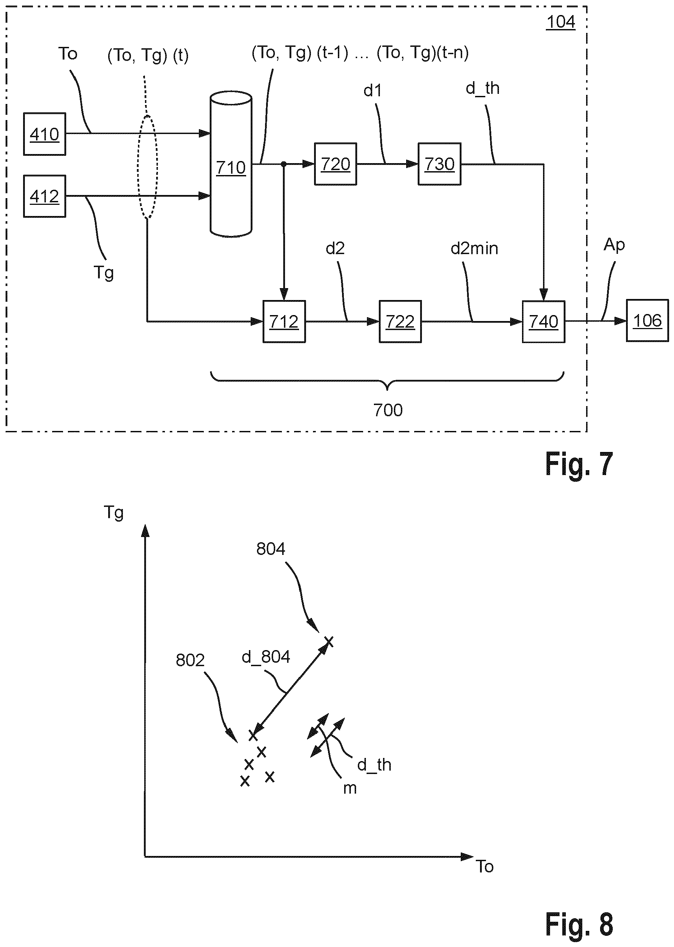

Figur 7 zeigt ein weiteres Blockdiagramm zur Ermittlung von Anomalien. Die Ermittlungseinheiten 410 und 412 ermitteln eine Mehrzahl von Paaren von Öffnungs- und Schließzeitdauern (To, Tg) (t), insbesondere in Abhängigkeit von dem Ansteuersignal c und in Abhängigkeit von dem Beschleunigungssignal a gemäß der Figur 4.

Eine Ermittlungseinheit 700 ist dazu eingerichtet, eine weitere Anomalie Ap in Abhängigkeit von der Mehrzahl von Paaren von Öffnungs- und Schließzeitdauern (To, Tg) (t) bis (To, Tg) (t-n) zu ermitteln, wobei t eine Zeiteinheit repräsentiert und beispielsweise auf die Öffnungs- oder Schließzeitdauer bezogen ist. Die Ermittlungseinheit 700 umfasst eine Speichereinheit 710, auf welcher eine Mehrzahl von Paaren von in der Vergangenheit liegenden Schließ- und Öffnungszeitdauern (To, Tg), die mit jeweiligen Zeit- oder Ermittlungszeitpunkten t-1 bis t-n verknüpft sind, abgespeichert sind. Neue zu einem aktuellen Zeitpunkt t ermittelte Paare werden für einen nachfolgend erläuterten Vergleich herangezogen. Mittels des Parameters n kann die Anzahl oder eine in der Vergangenheit liegende Zeitdauer festgelegt werden, die für die nachfolgende Ermittlung der weiteren Anomalie Ap genutzt wird. Hierdurch werden ältere Werte ausgeschlossen und nicht berücksichtigt.

Die Öffnungs- und Schließzeitdauern To, Ts entsprechen Diagnoseergebnissen, welche paarweise zeitlich benachbarte Schließ- und Öffnungszyklen des Prozessventils charakterisieren. Insbesondere werden zeitlich benachbarte Schließ- und Öffnungszeitdauern To, Ts paarweise verknüpft.

Eine Ermittlungseinheit 720 ermittelt in Abhängigkeit von der Mehrzahl an Paaren von Schließ- und Öffnungszeitdauern (To, Tg), insbesondere zwischen jeweils zweien der Paare, eine jeweilige euklidische Distanz d. Aus der Mehrzahl von euklidischen Distanzen d1 ermittelt eine Ermittlungseinheit 730 einen Schwellwert d_th. Der Schwellwert für die Anomaliedetektion ist also selbstlernend.

Beispielsweise ermittelt die Ermittlungseinheit 720 den Schwellwert d_th wie folgt: In einem ersten Schritt werden die Werte der letzten n Schaltzyklen oder m Minuten, also während einer Zeitdauer, aufgenommen. Mit jedem Speichervorgang gemäß der Aufnahme eines neuen Wertepaares in die Speichereinheit 710 ändern sich die Bezugsdaten und der nachfolgend erläuterte Schwellwert.

In einem zweiten Schritt werden die euklidischen Distanzen der im ersten Schritt ermittelten Wertepaare zueinander ermittelt. Die jeweilige euklidische Distanz d1 ergibt sich aus bei zwei 'Punkten' 802, 804 gemäß zwei Wertepaaren wie folgt:

$$d1 = \sqrt{(Tg_{802} - Tg_{804})^2 + (To_{802} - To_{804})^2}$$

Hierbei sind Tg_802 und Tg_804 die jeweiligen Werte der Schließzeit Tg des zugeordneten Wertepaares 802 und 804. To_802 und To_804 entsprechen den jeweiligen Werten der Öffnungszeit To des jeweiligen Wertepaares 802, 804.

Aus den ermittelten Distanzen wird in einem dritten Schritt der Schwellwert d_th beispielsweise wie folgt ermittelt:

$$d_{th} = F \cdot \max(\forall d)$$

Dabei ist F ein fester Faktor. Gemäß der Funktion max wird der größte Werte aus allen ermittelten Distanzen ermittelt.

Eine Ermittlungseinheit 712 ermittelt eine Mehrzahl von euklidischen Abständen d2 des beispielsweise zuletzt ermittelten Wertepaars (To, Tg) (t) zu den einzelnen Wertepaaren (To, Tg) (t-1) bis (To, Tg) (t-n) analog zur Ermittlung der euklidischen Abstände d1.

Eine Ermittlungseinheit 722 ermittelt den kleinsten euklidischen Abstand d2min aus der Mehrzahl von ermittelten euklidischen Abständen.

Eine Ermittlungseinheit 740 vergleicht den kleinsten euklidischen Abstand d2min mit dem ermittelten Schwellwert d_th. Überschreitet beispielweise wenigstens eine Distanz d den Schwellwert d_th, dann wird die Anomalie Ap ausgegeben und bereitgestellt. Die Anomalie Ap wird beispielsweise durch einen Bitwert dargestellt.

Figur 8 zeigt ein schematisches Öffnungszeitdauer-Schließzeitdauer-Diagramm. Die gezeigten Punkte repräsentieren paarweise assoziierte Schließ- und Öffnungszeitdauern, die beispielsweise aufeinander folgen. Eine Mehrzahl 802 von Paaren bzw. Punkten sind nahe beieinander und indizieren ein ähnliches Öffnungs-und Schließverhalten für diese Paare. Ein weiterer Punkt 804 ist hingegen weiter entfernt von der Mehrzahl 802 von Punkten.

Beispielsweise bildet die Ermittlungseinheit 730 aus der Figur 7 zunächst einen Mittelwert m und eine Varianz aus den Distanzen d. Die Summe aus dem Mittelwert m, der Varianz und einem zusätzlichen festen oder variablen Offset ergibt den Schwellwert d_th. Eine beispielhafte Distanz d_804 ist größer als der Schwellwert d_th und indiziert somit das Vorliegen der Anomalie.

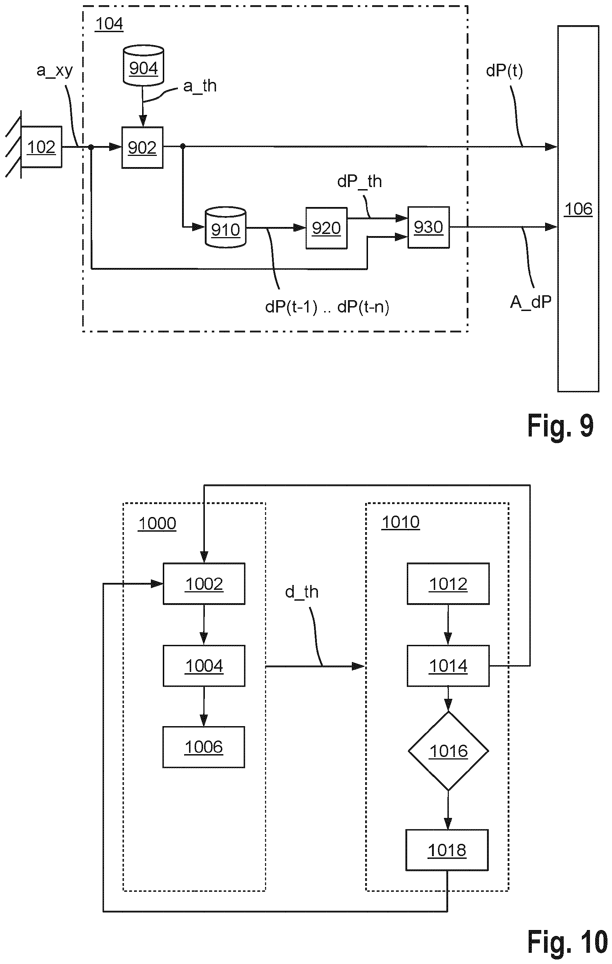

Figur 9 zeigt ein schematisches Blockdiagramm. Die Ermittlung des wenigstens einen Diagnoseergebnisses mittels der Ermittlungseinheit 104 umfasst eine Ermittlung einer mit dem Prozessmedium assoziierten Druckänderung dP als Diagnoseergebnis in Abhängigkeit von dem wenigstens einen Beschleunigungssignal a, wobei das wenigstens eine Beschleunigungssignal a eine Mehrzahl von Beschleunigungswerten a_xy, welche jeweils eine lotrecht zur Stellachse S orientierte Beschleunigung des Prozessventils 200 repräsentieren, umfasst.

Die mit dem Prozessmedium assoziierte Druckänderung dP wird dann mittels einer Ermittlungseinheit 902 ermittelt, wenn ein Druckänderungs-Schwellwert a_th, dP_th von wenigstens einem der Mehrzahl von Beschleunigungswerten a_xy, welche jeweils die lotrecht zur Stellachse S orientierte Beschleunigung des Prozessventils repräsentieren, überschritten wird. Der Schwellwert a_th wird beispielsweise vorab ermittelt und in einer Speichereinheit 904 abgelegt.

Die Ermittlung des wenigstens einen Diagnoseergebnisses umfasst eine Ermittlung einer Druckänderungs-Anomalie A_dP als Diagnoseergebnis, insbesondere eines kritischen Druckschlags, sobald wenigstens einer der Mehrzahl von Beschleunigungswerten a_xy, welche jeweils die lotrecht zur Stellachse orientierte Beschleunigung des Prozessventils repräsentieren, den von einer Mehrzahl von Druckänderungen dP abhängigen oder einen vorab festgelegten Druckänderungs-Schwellwert dP_th überschreitet.

Die Druckänderung dP wird beispielsweise in der gleichen physikalischen Einheit wie die Beschleunigungswerte a_xy ermittelt. Damit kann eine Mehrzahl von Druckänderungen dP in einer Speichereinheit 910 abgelegt und mit Beschleunigungswerten a_xy verglichen werden. In der Speichereinheit 910 befinden sich beispielsweise eine Anzahl von n Druckänderungen dP, die zur weiteren Ermittlung herangezogen werden. Alle Druckänderungen dP, die älter als n sind, werden beispielsweise verworfen.

Die Mehrzahl von Druckänderungen dP wird mittels der Ermittlungseinheit 920 in einen Schwellwert dP_th gewandelt. Eine Ermittlungseinheit 930 ermittelt die Anomalie A_dP, sobald einer der Beschleunigungswerte a_xy den ermittelten Schwellwert dP_th überschreitet.

Der Druckänderungs-Schwellwert dP_th wird beispielsweise während des Betriebs des Prozessventils wie folgt gebildet. Zunächst wird ein Mittelwert der vorliegenden Druckänderungs-Schwellwerte, die beispielsweise über einen vorbestimmten zurückliegenden Zeitraum ermittelt wurden, gebildet. Der Mittelwert wird anschließend mit einem festen oder variablen Offset addiert, um im Betrieb normale Druckschläge im Sinne der Druckänderung dP von größeren Druckschlägen im Sinne einer Anomalie zu unterscheiden.

Figur 10 zeigt ein schematisches Ablaufdiagramm zur Erläuterung der Verarbeitung der in Figur 8 gezeigten paarweise assoziierten Schließ- und Öffnungszeitdauern.

In einem Beispiel wird nach jedem gespeicherten Wertepaar der Schwellwert d_th neu ermittelt.

Der Schwellwert d_th wird in einem Ermittlungsmodus gemäß dem Block 1000 gelernt bzw. ermittelt: In einem Schritt 1002 werden die Punkte, also die paarweise assoziierten Schließ- und Öffnungszeitdauern, der letzten n Schaltzyklen oder m Minuten ermittelt. In einem Schritt 1004 werden die euklidischen Distanzen der Punkte untereinander ermittelt. Dazu kann der Satz des Pythagoras genutzt werden. Die Entfernung zwischen zwei Punkten ergibt sich aus der Quadratwurzel( $N^2 + O^2$ ); mit N Entfernung nach Norden, O Entfernung nach Osten. Der Satz funktioniert in jedem achsenorthogonalen, mehr-als-Null-dimensionalen System.

In einem Schritt 1006 wird der Schwellwert d_th in Abhängigkeit von den Distanzen ermittelt. Beispielsweise ergibt sich der Schwellwert d_th aus dem Produkt: fester, vorab ermittelter Faktor * maximale Distanz zwischen zwei Punkten.

In einem Betriebsmodus gemäß dem Block 1010 wird der Schwellwert d_th verwendet. In einem Schritt 1012 wird ein neuer Wert / Wertetupel / Punkt ermittelt. In einem Schritt 1014 wird ermittelt, welche Distanzen der neu ermittelte Punkt zu den bereits ermittelten Punkten hat. In einem Schritt 1016 wird ermittelt, ob eine minimale Distanz zwischen dem neu ermittelten Punkt und den bereits ermittelten Punkten den Schwellwert d_th überschreitet. Trifft dies zu, dann wird in einem Schritt 1018 die Anomalie ermittelt und ggf. ausgegeben. Optional kann im Schritt 1018 ein Verwerfen einer Anzahl von bis zu o aufeinanderfolgender Anomalien erfolgen, bis eine Anomalie ermittelt und ggf. ausgegeben wird, um eine gewisse Entprellung zu erreichen. Anschließend wird wieder in den Schritt 1002 gewechselt.

**Patentansprüche**

1. Verfahren zur Ermittlung einer Ventilstellung (o, g) eines Prozessventils (200) umfassend:

    Ermitteln, mittels wenigstens eines zu einer Stellachse (S) eines Prozessventils (200) feststehend angeordneten Beschleunigungssensors (102), wenigstens eines eine relative Beschleunigung wenigstens eines Teils des Prozessventils (200) repräsentierenden Beschleunigungssignals (a);

Ermitteln, mittels wenigstens einer Auswerteeinheit (104), wenigstens eines die Ventilstellung (o, g) umfassenden Diagnoseergebnisses des Prozessventils (200) in Abhängigkeit von dem wenigstens einen Beschleunigungssignal (a) und in Abhängigkeit von einem mit einem Ventilantrieb (202) assoziierten Ansteuersignal (c); und

Bereitstellen, mittels wenigstens einer Schnittstelle (106), des wenigstens einen Diagnoseergebnisses.

2. Das Verfahren gemäß einem der vorigen Ansprüche umfassend:

Ermitteln eines ersten Zeitpunktes (t1, ta), welcher einen Beginn einer von dem Ventilantrieb (202) ausgehenden Bewegung eines Absperrkörpers (204) des Prozessventils (200) repräsentiert, in Abhängigkeit von dem mit dem Ventilantrieb (202) assoziierten Ansteuersignal (c);

wobei das wenigstens eine Beschleunigungssignal (a) eine Mehrzahl von Beschleunigungswerten (a_z), welche jeweils eine parallel zur Stellachse (S) orientierte relative Beschleunigung wenigstens eines Teils des Prozessventils (200) repräsentieren, umfasst, wobei das Verfahren umfasst:

Ermitteln eines auf den ersten Zeitpunkt (t1, ta) folgenden zweiten Zeitpunktes (t2, tb), welcher ein Erreichen wenigstens einer Endposition des bewegbaren Absperrkörpers (204) des Prozessventils (200) charakterisiert, in Abhängigkeit von der Mehrzahl von Beschleunigungswerten (a_z), welche jeweils die parallel zur Stellachse (S) orientierte Beschleunigung des Prozessventils (200) repräsentieren.

3. Das Verfahren gemäß dem Anspruch 2, wobei die Ventilstellung (o, g) als Diagnoseergebnis ermittelt wird, wenn der zweite Zeitpunkt (t2, tb) sich innerhalb wenigstens eines Zeitfensters (Tzo, Tzg), dessen zeitliche Position abhängig von dem ersten Zeitpunkt (t1, ta) ist, befindet.

4. Das Verfahren gemäß dem Anspruch 1 und 2 oder gemäß dem Anspruch 3, wobei eine mit einem Öffnungsvorgang oder Schließvorgang des Prozessventils (200) assoziierte Anomalie (Ao, Ag) als Diagnoseergebnis ermittelt wird, wenn der zweite Zeitpunkt (t2, tb) sich außerhalb des bzw. eines Zeitfensters (Tzo, Tzg), dessen zeitliche Position abhängig von dem ersten Zeitpunkt (t1, ta) ist, befindet.

5. Das Verfahren gemäß einem der vorigen Ansprüche, wobei das Verfahren umfasst:

Ermitteln einer Mehrzahl von Paaren von Öffnungs- und Schließzeitdauern ((To, Tg) (t)) des Prozessventils (200), insbesondere in Abhängigkeit von dem Ansteuersignal (c) und in Abhängigkeit von dem Beschleunigungssignal (a); und

Ermitteln einer Anomalie (Ap) in Abhängigkeit von der Mehrzahl von Paaren von Öffnungs- und Schließzeitdauern ((To, Tg)(t)).

6. Das Verfahren gemäß einem der vorigen Ansprüche, wobei die Ermittlung des wenigstens einen Diagnoseergebnisses eine Ermittlung einer mit dem Prozessmedium assoziierten Druckänderung (dP) in Abhängigkeit von dem wenigstens einen Beschleunigungssignal (a) umfasst, wobei das wenigstens eine Beschleunigungssignal (a) eine Mehrzahl von Beschleunigungswerten (a_xy), welche jeweils eine lotrecht zur Stellachse (S) orientierte Beschleunigung des Prozessventils (200) repräsentieren, umfasst.

7. Das Verfahren gemäß dem Anspruch 6, wobei die mit dem Prozessmedium assoziierte Druckänderung (dP) dann ermittelt wird, wenn ein Druckänderungs-Schwellwert (a_th; a_th2) von wenigstens einem der Mehrzahl von Beschleunigungswerten (a_xy), welche jeweils die lotrecht zur Stellachse (S) orientierte Beschleunigung des Prozessventils (200) repräsentieren, überschritten wird.

8. Das Verfahren gemäß einem der vorigen Ansprüche, wobei die Ermittlung des wenigstens einen Diagnoseergebnisses eine Ermittlung einer Druckänderungs-Anomalie (A_dP), insbesondere eines kritischen Druckschlags, umfasst, sobald wenigstens einer der Mehrzahl von Beschleunigungswerten (a_xy), welche jeweils die lotrecht zur Stellachse (S) orientierte Beschleunigung des Prozessventils (200) repräsentieren, einen von einer Mehrzahl von Druckänderungen (dP) abhängigen oder einen vorab festgelegten Druckänderungs-Schwellwert (dP_th) überschreitet.

9. Ein Prozessventil (200) umfassend:

wenigstens einen zu einer Stellachse (S) des Prozessventils (200) feststehend angeordneten Beschleunigungssensor (102), welcher dazu eingerichtet ist, wenigstens ein eine relative Beschleunigung wenigstens eines Teils des Prozessventils (200) repräsentierendes Beschleunigungssignal (a) zu ermitteln;

wenigstens eine Auswerteeinheit (104), welche dazu eingerichtet ist, wenigstens ein die Ventilstellung (o, g) umfassendes Diagnoseergebnis des Prozessventils (200) in Abhängigkeit von dem wenigstens einen Beschleunigungssignal (a) und in Abhängigkeit von einem mit einem Ventilantrieb (202) assoziierten Ansteuersignal (c) zu ermitteln; und

wenigstens eine Schnittstelle (106), welche dazu eingerichtet ist, das wenigstens eine Diagnoseergebnis bereitzustellen.

10. Das Prozessventil (200) gemäß dem Anspruch 9, wobei der wenigstens eine Beschleunigungssensor (102) mit dem Ventilantrieb (202) feststehend verbunden ist.

11. Das Prozessventil (200) gemäß dem Anspruch 9 oder 10, wobei der Beschleunigungssensor (102) auf einer Leiterplatte angeordnet ist, die fest mit dem Ventilantrieb verbunden ist.

12. Das Prozessventil (200) gemäß einem der Ansprüche 9 bis 11, wobei die Schnittstelle (106) eine Datenschnittstelle (106b) und/oder eine Benutzerschnittstelle (106a) umfasst.

13. Das Prozessventil (200) gemäß einem der Ansprüche 9 bis 12, wobei das Prozessventil (200) derart eingerichtet ist, um das Verfahren gemäß einem der Ansprüche 1 bis 8 durchzuführen.


**Claims**

1. Method for determining a valve position (o, g) of a process valve (200), comprising:

    determining, by means of at least one acceleration sensor (102), the acceleration sensor being fixedly arranged relative to an adjusting axis (S) of a process valve (200), at least one acceleration signal (a) which represents a relative acceleration of at least one part of the process valve (200);

    determining, by means of at least one evaluation unit (104), on the basis of the at least one acceleration signal (a) and of a control signal (c) associated with a valve drive (202), at least one diagnostic result of the process valve (200), which result comprises the valve position (o, g); and

    providing, by means of at least one interface (106), the at least one diagnostic result.

2. Method according to any of the preceding claims, comprising:

    determining a first time point (t1, ta) on the basis of the control signal (c) associated with the valve drive (202), which time point represents a start of a movement of a shut-off body (204) of the process valve (200), the movement originating from the valve drive (202),

    wherein the at least one acceleration signal (a) comprises a plurality of acceleration values (a_z), each of which represents a relative acceleration of at least one part of the process valve (200), which relative acceleration is oriented parallel to the adjusting axis (S), wherein the method comprises:

    determining a second time point (t2, tb) following the first time point (t1, ta) on the basis of the plurality of acceleration values (a_z), each of which represents the acceleration of the process valve (200), which acceleration is oriented parallel to the adjusting axis (S), which second time point characterizes reaching at least one end position of the movable shut-off body (204) of the process valve (200).

3. Method according to claim 2, wherein the valve position (o, g) is determined as the diagnostic result if the second time point (t2, tb) is within at least one time window (Tzo, Tzg) whose temporal position is dependent on the first time point (t1, ta).

4. Method according to claim 1 and claim 2 or according to claim 3, wherein an anomaly (Ao, Ag) associated with an opening process or closing process of the process valve (200) is determined as the diagnostic result if the second time point (t2, tb) is outside the or a time window (Tzo, Tzg) whose temporal position is dependent on the first time point (t1, ta).

5. Method according to any of the preceding claims, wherein the method comprises:

determining a plurality of pairs of opening and closing time periods ((To, Tg) (t)) of the process valve (200), in particular on the basis of the control signal (c) and of the acceleration signal (a); and

determining an anomaly (Ap) on the basis of the plurality of pairs of opening and closing time periods ((To, Tg)(t)).

6. Method according to any of the preceding claims, wherein determining the at least one diagnostic result comprises determining a pressure change (dP) associated with the process medium on the basis of the at least one acceleration signal (a), wherein the at least one acceleration signal (a) comprises a plurality of acceleration values (a_xy), each of which represents an acceleration of the process valve (200), which acceleration is oriented perpendicular to the adjusting axis (S).

7. Method according to claim 6, wherein the pressure change (dP) associated with the process medium is determined when a pressure change threshold value (a_th; a_th2) is exceeded by at least one of the plurality of acceleration values (a_xy), each of which represents the acceleration of the process valve (200), which acceleration is oriented perpendicular to the adjusting axis (S).

8. Method according to any of the preceding claims, wherein determining the at least one diagnostic result comprises determining a pressure change anomaly (A_dP), in particular a critical pressure surge, as soon as at least one of the plurality of acceleration values (a_xy), each of which represents the acceleration of the process valve (200), which acceleration is oriented perpendicular to the adjusting axis (S), exceeds a pressure change threshold value (dP_th) dependent on a plurality of pressure changes (dP) or a predetermined pressure change threshold value.

9. Process valve (200) comprising:

at least one acceleration sensor (102), the acceleration sensor being fixedly arranged relative to an adjusting axis (S) of the process valve (200) and being configured to determine at least one acceleration signal (a), the acceleration signal representing a relative acceleration of at least one part of the process valve (200); at least one evaluation unit (104) which is configured to determine, on the basis of the at least one acceleration signal (a) and of a control signal (c) associated with a valve drive (202), at least one diagnostic result of the process valve (200), the diagnostic result comprising the valve position (o, g); and at least one interface (106) which is configured to provide the at least one diagnostic result.

10. Process valve (200) according to claim 9, wherein the at least one acceleration sensor (102) is fixedly connected to the valve drive (202).

11. Process valve (200) according to claim 9 or claim 10, wherein the acceleration sensor (102) is arranged on a circuit board which is fixedly connected to the valve drive.

12. Process valve (200) according to any of claims 9 to 11, wherein the interface (106) comprises a data interface (106b) and/or a user interface (106a).

13. Process valve (200) according to any of claims 9 to 12, wherein the process valve (200) is configured to carry out the method according to any of claims 1 to 8.

**Revendications**

1. Procédé pour la détermination d'une position de soupape (o, g) d'une soupape de processus (200) comprenant :

la détermination, au moyen d'au moins un capteur d'accélération (102) disposé de manière fixe par rapport à un axe de réglage (S) d'une soupape de processus (200), d'au moins un signal d'accélération (a) représentant une accélération relative d'au moins une partie de la soupape de processus (200) ; la détermination, au moyen d'au moins une unité d'évaluation (104), d'au moins un résultat de diagnostic de la soupape de processus (200) comprenant la position de soupape (o, g) en fonction de l'au moins un signal d'accélération (a) et en fonction d'un signal de commande (c) associé à un entraînement de soupape (202) ; et la fourniture, au moyen d'au moins une interface (106), de l'au moins un résultat de diagnostic.

2. Procédé selon l'une des revendications précédentes comprenant :

la détermination d'un premier instant (t1, ta) qui représente un début d'un mouvement d'un corps d'arrêt (204) de la soupape de processus (200), lequel mouvement part de l'entraînement de soupape (202), en fonction du signal de commande (c) associé à l'entraînement de soupape (202) ;

dans lequel l'au moins un signal d'accélération (a) comprend une pluralité de valeurs d'accélération (a_z), lesquelles représentent respectivement une accélération relative d'au moins une partie de la soupape de processus (200), laquelle accélération est orientée parallèlement à l'axe de réglage (S), dans lequel le procédé comprend :

la détermination d'un second instant (t2, tb) suivant le premier instant (t1, ta) et caractérisant une atteinte d'au moins une position finale du corps d'arrêt (204) mobile de la soupape de processus (200), en fonction de la pluralité de valeurs d'accélération (a_z), lesquelles représentent respectivement l'accélération de la soupape de processus (200), laquelle accélération est orientée parallèlement à l'axe de réglage (S).

3. Procédé selon la revendication 2, dans lequel la position de soupape (o, g) est déterminée comme résultat de diagnostic lorsque le second instant (t2, tb) se trouve à l'intérieur d'au moins une fenêtre temporelle (Tzo, Tzg) dont la position temporelle dépend du premier instant (t1, ta).

4. Procédé selon les revendications 1 et 2 ou selon la revendication 3, dans lequel une anomalie (Ao, Ag) associée à une opération d'ouverture ou à une opération de fermeture de la soupape de processus (200) est déterminée comme résultat de diagnostic lorsque le second instant (t2, tb) se trouve en dehors de la ou d'une fenêtre temporelle (Tzo, Tzg) dont la position temporelle dépend du premier instant (t1, ta).

5. Procédé selon l'une des revendications précédentes, dans lequel le procédé comprend :

la détermination d'une pluralité de paires de durées d'ouverture et de fermeture ((To, Tg) (t)) de la soupape de processus (200), en particulier en fonction du signal de commande (c) et en fonction du signal d'accélération (a) ; et

la détermination d'une anomalie (Ap) en fonction de la pluralité de paires de durées d'ouverture et de fermeture ((To, Tg)(t)).

6. Procédé selon l'une des revendications précédentes, dans lequel la détermination de l'au moins un résultat de diagnostic comprend une détermination d'une variation de pression (dP) associée au fluide de processus en fonction de l'au moins un signal d'accélération (a), dans lequel l'au moins un signal d'accélération (a) comprend une pluralité de valeurs d'accélération (a_xy) qui représentent respectivement une accélération de la soupape de processus (200), laquelle accélération est orientée perpendiculairement à l'axe de réglage (S).

7. Procédé selon la revendication 6, dans lequel la variation de pression (dP) associée au fluide de processus est déterminée lorsqu'une valeur seuil de variation de pression (a_th ; a_th2) d'au moins une valeur d'accélération parmi la pluralité de valeurs d'accélération (a_xy) est dépassée, lesquelles valeurs d'accélération représentent respectivement l'accélération de la soupape de processus (200), laquelle accélération est orientée perpendiculairement à l'axe de réglage (S).

8. Procédé selon l'une des revendications précédentes, dans lequel la détermination de l'au moins un résultat de diagnostic comprend une détermination d'une anomalie de variation de pression (A_dP), en particulier d'un coup de bélier critique, dès qu'au moins une valeur d'accélération parmi la pluralité de valeurs d'accélération (a_xy), lesquelles représentent respectivement l'accélération de la soupape de processus (200), laquelle accélération est orientée perpendiculairement à l'axe de réglage (S), dépasse une valeur seuil de variation de pression (dP_th) dépendant d'une pluralité de variations de pression (dP) ou définie au préalable.

9. Soupape de processus (200) comprenant :

au moins un capteur d'accélération (102) disposé de manière fixe par rapport à un axe de réglage (S) de la soupape de processus (200), lequel capteur d'accélération est configuré pour déterminer au moins un signal d'accélération (a) représentant une accélération relative d'au moins une partie de la soupape de processus (200) ;

au moins une unité d'évaluation (104) qui est configurée pour déterminer au moins un résultat de diagnostic de la soupape de processus (200) comprenant la position de soupape (o, g) en fonction de l'au moins un signal d'accélération (a) et en fonction d'un signal de commande (c) associé à un entraînement de soupape (202) ; et

au moins une interface (106) qui est configurée pour fournir l'au moins un résultat de diagnostic.

**10.** Soupape de processus (200) selon la revendication 9, dans laquelle l'au moins un capteur d'accélération (102) est relié de manière fixe à l'entraînement de soupape (202).

**11.** Soupape de traitement (200) selon la revendication 9 ou 10, dans laquelle le capteur d'accélération (102) est disposé sur une carte de circuit imprimé qui est reliée de manière fixe à l'entraînement de soupape.

**12.** Soupape de processus (200) selon l'une des revendications 9 à 11, dans laquelle l'interface (106) comprend une interface de données (106b) et/ou une interface utilisateur (106a).

**13.** Soupape de processus (200) selon l'une des revendications 9 à 12, dans laquelle la soupape de processus (200) est conçue pour mettre en oeuvre le procédé selon l'une des revendications 1 à 8.

100

106

a

k

106a

102 → 104 106b

**Fig. 1**

200

S

c

202

z
y
x

100

204

206

208

**Fig. 2**

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005126639 A1
- US 2006254357 A1
- EP 0637713 A1
- DE 19947129 A1
- US 2002062682 A1
- EP 0410317 A2